# EUROPÄISCHE PATENTSCHRIFT

(11) **EP 0 468 970 B1**
(45) Veröffentlichungstag und Bekanntmachung des Hinweises auf die Patenterteilung: **31.03.1993**
(21) Anmeldenummer: 90903784.8
(22) Anmeldetag: 07.03.1990
(51) Int. Cl.: B01D 46/42, B01D 46/24

(54) **FILTERANORDNUNG FÜR GROSSBEHÄLTER**
A FILTER ARRANGEMENT FOR LARGE CONTAINERS
AGENCEMENT DE FILTRAGE POUR GROS CONTENEURS

(30) Priorität: 30.03.1989 DE 3910203; 16.09.1989 DE 3931033
(43) Veröffentlichungstag der Anmeldung: 05.02.1992
(73) Patentinhaber: BISSINGER GMBH, D-74374 Zaberfeld (DE)
(72) Erfinder: BISSINGER, Heinz, D-7129 Zaberfeld (DE)
(74) Vertreter: Jeck, Anton, Dipl.-Ing.
(86) Internationale Anmeldenummer: DE9000162
(87) Internationale Veröffentlichungsnummer: WO9011816

(56) Entgegenhaltungen:
- DE-A- 3 303 257
- DE-B- 1 250 727
- DE-C- 34 401
- US-A- 3 832 833

## Beschreibung

Die Erfindung betrifft eine Filteranordnung für Großbehälter, insbesondere Silos, mit einem mindestens ein Filter aufnehmenden Hohlkörper, dessen eine mit dem Großbehälter verbindbare Seite eine Zuluftöffnung besitzt, während seine andere Seite mindestens eine mit dem Filter kommunizierende Abluftöffnung aufweist.

Derartige Filteranordnungen sind gerade bei Silos erforderlich, um beim Füllen des Silos unter Druck eine Staubentwicklung an der als Druckausgleichsöffnung dienenden Abluftöffnung zu vermeiden. Diese Filter setzen sich gerade bei Silos auf der Lufteinströmseite schnell zu, so daß sie ihre Wirksamkeit verlieren.

Die DE-C 34 401 zeigt eine Filteranordnung aus röhrenförmigen Gas- und Dampffiltern. Diese besitzen Dichtungsköpfe, die zur Abdichtung mittels einer Platte dicht auf eine Auflagefläche, in die die Filter eingesetzt sind, angedrückt werden.

In der DE-B 12 50 727 wird vorgeschlagen, bei Taschenfiltern für Staubgase zwischen je zwei benachbarten Filtertaschen in verschiedenen Höhen an einer vertikalen, mit Schlitzen versehenen Kammerwand hakenförmige Stützklauen mit von oben nach unten zur Kammerwand geneigten Keilflächen zu befestigen, auf die Klemmleisten aufgeschoben sind. Auf diese Weise soll ein einfacher Austausch der Filterbeutel der Taschenfilter erreicht werden.

Die US-A 3 832 833 zeigt einen Filter für Zementsilos, der frei auf dem Silo aufgesetzt ist und mittels einer vollständig darüber gestülpten Kappe geschützt ist. Die zu filternde staubbelastete Luft strömt durch die Filterwandung von innen nach außen, so daß sich die Schmutzpartikel an der Innenfläche absetzen.

Die DE-A 33 03 257 schließlich zeigt eine Filteranordnung zum Entstauben staubbeladener Gase, wie sie in der Verfahrenstechnik der Physik zur Abreinigung von Gasen benutzt wird. Die Filterschläuche sind hierbei in den Oberteil eines inneren Rundbehälters in Durchbrüchen angeordnet und werden jeweils einzeln mittels Andruckplatten auf ihre Auflagefläche aufgedrückt.

Es ist Aufgabe der Erfindung, eine Filteranordnung der eingangs erwähnten Art zu schaffen, bei der das bzw. die Filterelemente auf einfache Weise von abgelagerten Staubpartikel gereinigt werden können und bei der zum Auswechseln des bzw. der Filterelemente der Zugang zu diesem bzw. diesen erleichtert ist.

Diese Aufgabe wird nach der Erfindung dadurch gelöst, daß die Filter in die Abluftöffnungen von außen her einsteckbar sind und sich an der Umrandung der Abluftöffnungen über Dichtflansche abstützen, daß eine Druckplatte, die den Abluftöffnungen entsprechende und mit diesen in Deckung gebrachte Öffnungen aufweist und deren Form etwa der Deckseite des Hohlkörpers entspricht, auf den Dichtungsflanschen der Filter unter Druck aufliegt, daß über der Druckplatte eine aus dem Bereich der Abluftseite herausbringbare Haube angeordnet ist, und daß zwischen der Haube und der Druckplatte in die Öffnungen gerichtete und an Druckluftleitungen angeschlossene Düsen angeordnet sind.

Bei dieser Ausgestaltung sind die Filterelemente von außen her leicht in die Abluftöffnungen einsteckbar, wobei sie sich mit ihren Dichtflanschen an den Umrandungen der Abluftöffnungen abstützen. Die Abdichtung zwischen den Filterelementen und den Abluftöffnungen wird durch die Druckplatte erreicht. Bei Wegnahme der Druckplatte können die Filterelemente leicht aus den Abluftöffnungen entfernt und ausgetauscht werden. Damit die Filterelemente im Betrieb nicht durch abgelagerte Staubpartikel in ihrer Wirksamkeit beeinträchtigt werden, sind die an Druckluftleitungen angeschlossenen Düsen vorgesehen, welche vorzugsweise in der Haube untergebracht sind. Die Düsen sind in die Öffnungen der Filterelemente gerichtet, so daß die in den Innenraum der Filterelemente strömende Druckluft die an den Außenflächen der Filterelemente abgelagerten Staubpartikel abstößt. Die Haube schützt die Filterelemente gegen Witterungseinflüsse, sie ist aber aus dem Bereich der Filterelemente bringbar, um zum Auswechseln der Filterelemente den Zugang zu diesen zu erleichtern.

Weitere zweckmäßige und vorteilhafte Ausgestaltungen der Erfindung gehen aus den Unteransprüchen hervor.

Eine besonders zweckmäßige Ausgestaltung sieht vor, daß die Abluftöffnung einen im Innenraum des Hohlkörpers angeordneten Flansch besitzt, der den Filterflansch radialseitig umgibt. Hierbei können diese Maßnahmen auch so getroffen sein, daß der Filterflansch einen kegelstumpfförmigen und einen ringförmigen Abschnitt besitzt, wobei der ringförmige Abschnitt die Basis des kegelstumpfförmigen Abschnittes umgibt und als Träger des Filters ausgebildet ist. Um die Verbindung zwischen dem Flansch der Abluftöffnung und dem Filterflansch zu verbessern, sieht eine weitere zweckmäßige Ausgestaltung vor, daß der Abluftöffnungsflansch mit dem kegelstumpfförmigen Abschnitt des Filterflansches formschlüssig verbindbar ist.

Um den auf den Filterflansch von der Haube her wirkenden Druck zu erhöhen, sieht eine zweckmäßige Ausgestaltung vor, daß im wirksamen Zustand der Haube der Abstand der Haube von der Abluftöffnungsseite des Hohlkörpers geringer ist als die Dicke des Filterflansches. Der Filterflansch besteht regelmäßig aus Kunststoff oder Gummi, während der Hohlkörper sowie die Haube aus Metall ausgebildet sind.

Eine weitere zweckmäßige Ausgestaltung sieht vor, daß die Öffnung der Haube von einem zum ,Hohlkörper hin vorstehenden und mit dem Filterflansch in Druckverbindung stehenden Flansch umgeben ist. Dadurch wird der Filterflansch nicht nur zwischen der Haube und der Deckseite des Hohlkörpers, sondern auch zwischen den Flanschen des Hohlkörpers und der Haube eingespannt, so daß eine form- und kraftschlüssige Verbindung zwischen diesen Teilen hergestellt werden kann.

Eine weitere zweckmäßige Ausgestaltung sieht vor, daß die Haube mit dem Hohlkörper über ein Gelenk und eine Spannvorrichtung lösbar verbindbar ist. Hierbei können diese Maßnahmen auch so getroffen sein, daß die Haube in einer horizontalen und/oder einer vertikalen Ebene um mindestens 90° verschwenkbar ist. Die Haube kann daher nicht nur um eine horizontale, sondern auch um eine vertikale Achse verschwenkt werden.

Handelt es sich um eine Filteranordnung mit einem zylindrischen oder quaderförmigen Hohlkörper und mehreren Filterelementen, dann ist es zweckmäßig, wenn zwischen der Haube und dem Hohlkörper ein die Filterelemente umgebender Dichtring eingespannt ist.

Um zu verhindern, daß in die Auslaßseite der Filterelemente Verunreinigungen von außen gelangen, sieht eine zweckmäßige Ausgestaltung der Erfindung vor, daß die dem Hohlkörper zugekehrte Seite der Haube eine die Öffnungen aufweisende Druckplatte trägt, deren Form etwa der Deckseite des Hohlkörpers entspricht. Hierbei ist es zweckmäßig, wenn die Druckplatte mit der Haube über Streben verbunden ist, zwischen denen die vom Großbehälter ausströmende und gefilterte Luft nach außen gelangen kann. Die Deckseite des Hohlkörpers ist daher allseitig umgeben, so daß die durch die Filterelemente vertikal nach oben strömende Luft an der Innenseite der konkaven Haube umgelenkt und entlang der radialen Außenseite des Hohlkörpers nach außen strömen kann.

Um die an der radialen Außenseite der Filterelemente abgelagerten Schmutzpartikeln einfach beseitigen zu können, sieht die Erfindung vor, daß zwischen der Haube und der Druckplatte in die Öffnungen gerichtete und an Druckluftleitung angeschlossene Düsen angeordnet sind. Wird nun die radiale Innenseite der hohlzylinderförmigen Filterelemente mit (sauberer) Druckluft pulsartig beaufschlagt, dann lösen sich die Staubpartikel von der radialen Außenseite der Filterelemente und gelangen in den Innenraum des Großbehälters.

Ein Ausführungsbeispiel der Erfindung ist in der Zeichnung schematisch dargestellt und wird im folgenden näher erläutert. Es zeigen:
- Fig. 1: eine Filteranordnung in Seitenansicht,
- Fig. 2: eine vertikale Draufsicht des Hohlkörpers ohne Haube und ohne Filterelemente in Richtung des Pfeiles II nach Fig. 1,
- Fig. 3: einen Teil eines Vertikalschnittes durch einen Flansch eines Filterelementes,
- Fig. 4: einen Teil eines Vertikalschnittes durch den Flansch eines weiteren Filterelementes,
- Fig. 5: einen Teil eines Schnittes durch einen Flansch eines anderen Filterelementes,
- Fig. 6: den mit VI bezeichneten Teil der Fig. 1 vergrößert dargestellt,
- Fig. 7: den mit VII bezeichneten Teil der Fig. 1 vergrößert dargestellt,
- Fig. 8: einen Teil eines Vertikalschnittes durch einen Flansch eines Filterelementes, wobei die Druckplatte als ein Rost ausgebildet ist,
- Fig. 9: eine Filteranordnung, bei der die Haube durch Stellkörper betätigbar ist, und
- Fig. 10: eine Draufsicht in Richtung des Pfeiles X nach Fig. 9, jedoch ohne Haube.

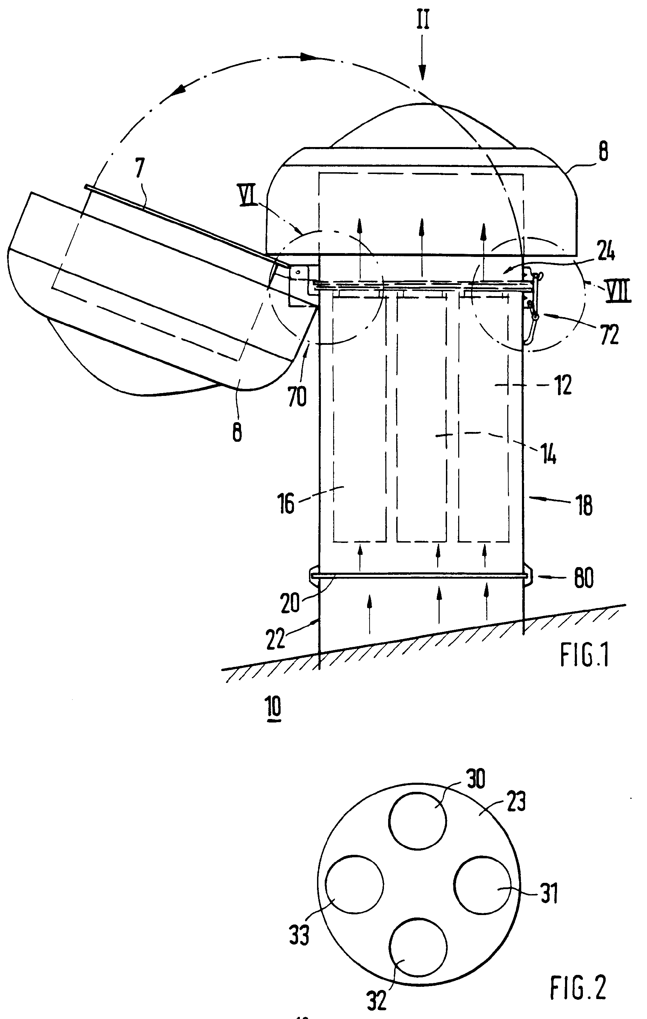

In Fig. 1 ist eine Filteranordnung für einen Großbehälter 10 mit einem mehrere Filter 12,14,16 aufnehmenden Hohlkörper 18 dargestellt, dessen eine mit dem Großbehälter 10 verbindbare Seite 20 als Zuluftöffnung ausgebildet ist, während seine andere Seite 23 mit den Filtern 12,14,16 kommunizierende Abluftöffnungen 30 bis 33 aufweist. Die Filter 12,14,16 sind in die Abluftöffnungen 30 bis 33 von außen her einsteckbar und stützen sich auf der Außenseite der Abluftöffnungen 30 bis 33 über ihre Flansche 40,41 und 42 ab. Die die Abluftöffnungen 30 bis 33 aufweisende Seite 24 des Hohlkörpers 18 ist mittels einer am Hohlkörper 18 angelenkten Haube 8 abdeckbar. Die Haube 8 besitzt mit den Abluftöffnungen 30 bis 33 kommunizierende Öffnungen 50,51 und 52 und steht in ihrem wirksamen Zustand in Druckverbindung mit den Flanschen 40, 41 und 42.

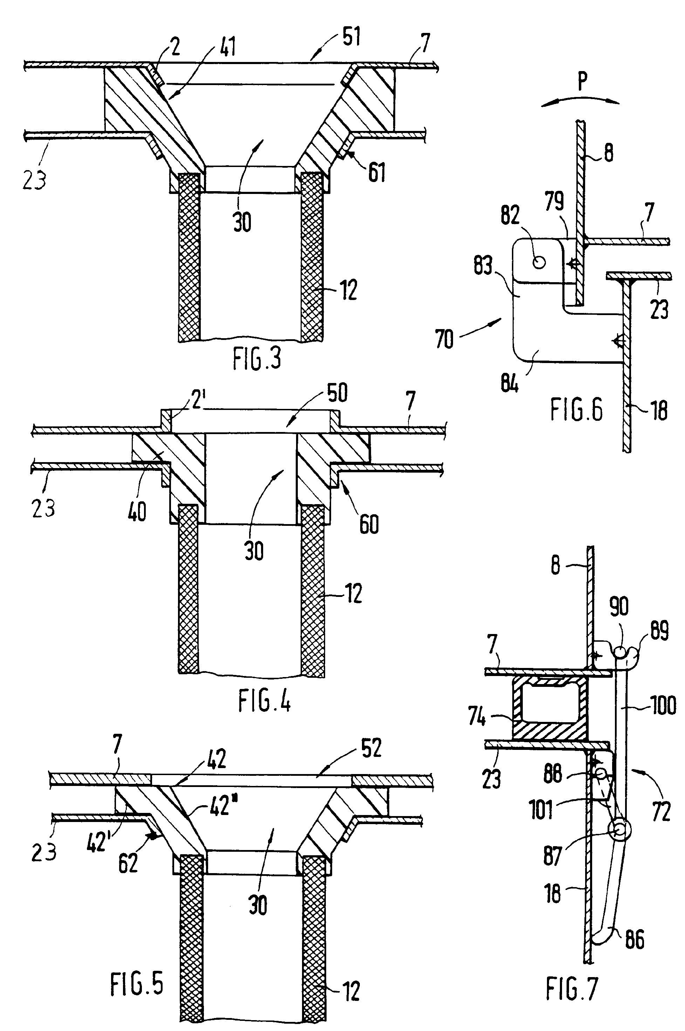

Man erkennt, daß die Abluftöffnung 30 einen in den Innenraum des Hohlkörpers 18 ragenden Flansch 60,61,62 besitzt, der den Filterflansch 40,41 und 42 radialseitig umgibt. Der Filterflansch 42 besitzt einen kegelstumpfförmigen Abschnitt 42˝ und einen ringförmigen Abschnitt 42′, wobei der ringförmige Abschnitt 42′ die Basis des kegelstumpfförmigen Abschnittes 42, 42′ umgibt und als Träger des Filterelementes 12 dient. Die Abluftöffnungsflansche 61 und 62 sind mit den Filterflanschen 41 und 42 formschlüssig verbindbar. Die dem Hohlkörper zugekehrte Seite der Haube 8 trägt eine die Öffnungen 30 bis 33 aufweisende Druckplatte 7, deren Form etwa der Deckseite des Hohlkörpers 18 entspricht. Im wirksamen Zustand der Haube 8 ist der Abstand der Druckplatte 7 von der Abluftöffnungsseite 23 des Hohlkörpers 18 geringer als die Dicke der Filterflansche 40,41 und 42. Die in der Druckplatte 7 ausgebildeten Öffnungen sind in den Ausführungsbeispielen nach Fig. 3 und 4 mit Flanschen 2 und 2′ versehen, wobei der Flansch 2 (Fig. 3) nach unten gebogen ist und mit dem Filterflansch 41 in Druckverbindung steht, während der Flansch 2′ von dem Filterflansch 40 abgekehrt ist.

Fig. 6 läßt erkennen, daß die Haube 8 mit dem Hohlkörper 18 über einen Gelenkkörper 70 verbindbar ist. Der im wesentlichen L-förmige Gelenkkörper 70 besitzt einen mit dem Hohlkörper 18 verschweißten Schenkel 84, an den sich ein vertikal ausgerichteter Schenkel 83 anschließt. Die Haube 8 besitzt einen Schenkel 79, der im Bereich 82 am Schenkel 83 angelenkt ist. In diesem Falle kann die Haube 8 in Richtung des Doppelpfeiles P verschwenkt werden. Der Gelenkkörper 70 könnte jedoch auch so ausgebildet sein, daß die Haube in einer horizontalen Ebene verschwenkbar wäre.

In Fig. 7 ist gezeigt, daß zwischen der Seite 23 und der Druckplatte 7 ein Dichtungskörper 74 einspannbar ist. Eine feste Verbindung zwischen der Haube 8 und dem Hohlkörper 18 ist durch eine Spannvorrichtung 72 herstellbar. Die Spannvorrichtung 72 besteht aus einem Spannbügel 100, der mit einer mit der Haube 8 verschweißten Nase 89 im Bereich 90 verschwenkbar ist. Der Spannbügel besitzt einen Betätigungsabschnitt 86, der im Bereich 87 über einen Schenkel 101 am Behälter 18 im Bereich 88 angelenkt ist.

Die Fig. 1 läßt ferner erkennen, daß auf der Deckseite des Großbehälters 10 ein ortsfester Stutzen 22 angeordnet ist, der mit dem Hohlkörper 18 über eine Spannvorrichtung 80 lösbar verbindbar ist.

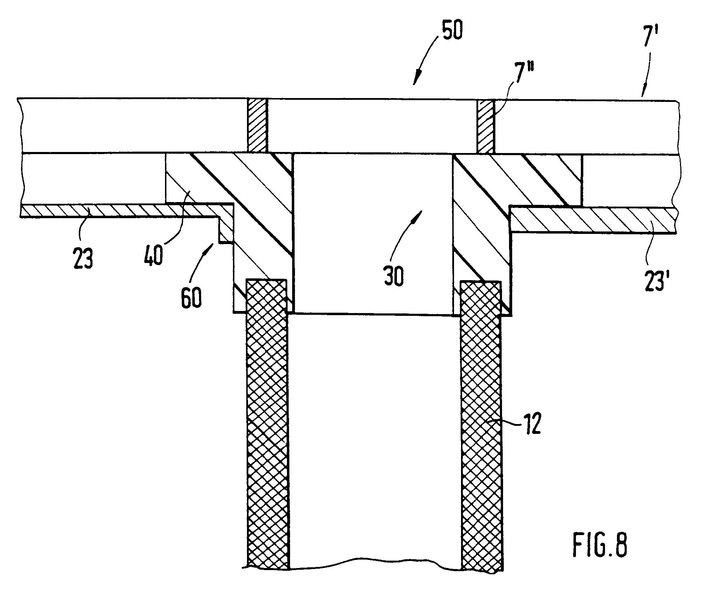

Fig. 8 zeigt, daß die Druckplatte 7′ aus einem Rost mit Maschen 7˝ besteht, die so bemessen sind, daß jeweils eine Masche mit jeweils einem Flansch 40 in Druckverbindung steht. Der Rost 7′ kann aus Draht oder einem Blechstück mit ausgestanzten Löchern bestehen. Die die Seite 23 bildende Abdeckung kann, ist die Dicke groß genug, ohne Abkantung (rechte Seite der Fig. 8) mit einer Abkantung 60 (linke Seite der Fig. 8) ausgebildet sein.

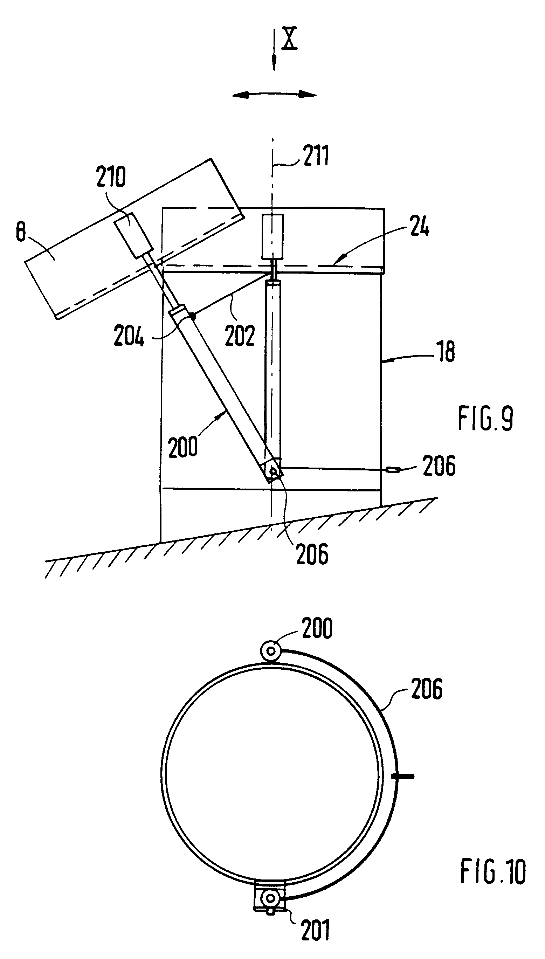

In den Fig. 9 und 10 ist eine aus zwei Arbeitszylindern gebildete Hebe- und Verschwenkeinrichtung 200, 201 dargestellt, die im Gelenkpunkt 206 am Hohlkörper 18 angelenkt und in Richtung des Doppelpfeiles verschwenkbar ist. Die Arbeitszylinder 200 und 201 sind an eine Druckluftleitung 206 angeschlossen und in Richtung der Kolbenstangen hin und her verstellbar. Die Druckluftleitung ist auch für die Düse vorgesehen. Um die Druckluft steuern zu können, ist mindestens ein nicht dargestelltes Ventil vorgesehen, durch dessen Umschaltung die Druckluft entweder in die Düse oder in die Arbeitszylinder geleitet wird. In ihrer wirksamen Arbeitslage drücken die Druckluftzylinder die Haube 8 gegen die Hohlkörper 18, so daß eine gasdichte Verbindung zwischen der Haube 8 und dem Hohlkörper 18 gewährleistet ist. Sollen nun die Filterelemente gereinigt oder ausgewechselt werden, dann werden die Kolbenstangen der Arbeitszylinder ausgefahren, die Haube 8 angehoben und die Arbeitszylinder 200 und 201 verschwenkt.

Es ist nicht erforderlich, daß die Haube 8 außerhalb der Einlaßöffnung 24 angeordnet ist. Es reicht vielmehr, wenn sie sich seitlich von der Mittelachse 211 befindet. Sind die rechts von der Mittelachse 211 angeordneten Filterelemente ausgewechselt, dann kann die Haube 8 nach rechts verschwenkt werden, so daß die linke Seite des Hohlkörpers 18 frei wird. Die Schwenkbewegungen der Arbeitszylinder 200 und 201 werden durch ein Begrenzungsglied 202 definiert. Hierbei kann es sich um ein Seil, eine Kette oder dgl. handeln. Der Vorteil dieser Ausführungsform besteht darin, daß besonders große und schwere Hauben 8 einfach und schnell betätigt werden können.

## Patentansprüche

1. Filteranordnung für Großbehälter, insbesondere Silos, mit einem mindestens ein Filter aufnehmenden Hohlkörper, dessen eine mit dem Großbehälter verbindbare Seite eine Zuluftöffnung besitzt, während seine andere Seite mindestens eine mit dem Filter kommunizierende Abluftöffnung aufweist,
dadurch gekennzeichnet,
daß die Filter (12,14,16) in die Abluftöffnungen (30 bis 33) von außen her einsteckbar sind und sich an der Umrandung der Abluftöffnungen (30 bis 33) über Dichtflansche (40,41,42) abstützen,
daß eine Druckplatte (7), die den Abluftöffnungen (30 bis 33) entsprechende und mit diesen in Deckung gebrachte Öffnungen (50;51;52) aufweist und deren Form etwa der Deckseite des Hohlkörpers (18) entspricht , auf den Dichtungsflanschen (40;41,;42) der Filter (12,14,16) unter Druck aufliegt,
daß über der Druckplatte (7) eine aus dem Bereich der Abluftseite herausbringbare Haube (8) angeordnet ist, und
daß zwischen der Haube (8) und der Druckplatte (7) in die Öffnungen (50;51;52) gerichtete und an Druckluftleitungen angeschlossene Düsen angeordnet sind.

2. Filteranordnung nach Anspruch 1,
dadurch gekennzeichnet,
daß die Abluftöffnung (30) einen im Innenraum des Hohlkörpers (18) angeordneten Flansch (60,61,62) besitzt, der den Filterflansch (40,41,42) radialseitig umgibt.

3. Filteranordnung nach Anspruch 1 oder 2,
dadurch gekennzeichnet,
daß der Filterflansch (42) einen kegelstumpfförmigen Abschnitt (42˝) und einen ringförmigen Abschnitt (42′) besitzt, wobei der ringförmige Abschnitt (42′) die Basis des kegelstumpfförmigen Abschnittes (42˝) umgibt und als Träger des Filters (12) ausgebildet ist.

4. Filteranordnung nach einem der Ansprüche 1 bis 3,
dadurch gekennzeichnet,
daß der Flansch (62) mit dem kegelstumpfförmigen Abschnitt (42˝) des Filterflansches (42) formschlüssig verbindbar ist.

5. Filteranordnung nach einem der Ansprüche 1 bis 4,
dadurch gekennzeichnet,
daß im wirksamen Zustand der Haube (8) der Abstand der Haube (8) von der Abluftöffnungsseite (23) des Hohlkörpers geringer ist als die Dicke des Filterflansches (40,41,42) im unbelasteten Zustand.

6. Filteranordnung nach einem der Ansprüche 1 bis 5,
dadurch gekennzeichnet,
daß die Öffnung (51) der Haube (8) von einem zum Hohlkörper (18) hin vorstehenden und mit dem Filterflansch (41) in Druckverbindung stehenden Flansch (2) umgeben ist.

7. Filteranordnung nach einem der Ansprüche 1 bis 6,
dadurch gekennzeichnet,
daß die Haube (8) mit dem Hohlkörper (18) über ein Gelenk (70) und eine Spannvorrichtung (72) über eine Hebe- und Verschwenkeinrichtung (200, 201) zusammenarbeitet.

8. Filteranordnung nach einem der Ansprüche 1 bis 7,
dadurch gekennzeichnet,
daß die Haube (8) in einer horizontalen und/oder einer vertikalen Ebene um mindestens 90° verschwenkbar ist.

9. Filteranordnung nach einem der Ansprüche 1 bis 8 mit einem zylindrischen oder quaderförmigen Hohlkörper und mehreren Filterelementen,
dadurch gekennzeichnet,
daß zwischen der Haube (8) und dem Hohlkörper (18) ein die Filter (12,14,16) umgebender Dichtring (74) eingespannt ist.

10. Filteranordnung nach einem der vorhergehenden Ansprüche,
dadurch gekennzeichnet,
daß die Druckplatte (7) mit der Haube (8) über Streben verbunden ist, zwischen denen die vom Großbehälter ausströmende und gefilterte Luft nach außen strömen kann.

11. Filteranordnung nach einem der vorhergehenden Ansprüche,
dadurch gekennzeichnet,
daß die Hebe- und Verschwenkeinrichtung aus mindestens einem mit der Haube (8) zusammenarbeitenden Stellkörper (200, 201) besteht, der die Haube (8) in ihrem wirksamen Zustand axial gegen den Hohlkörper (18) drückt und festhält, während er im unwirksamen Zustand der Haube (8) diese seitlich von der Mittelachse (211) des Hohlkörpers hält.

12. Filteranordnung nach einem der vorhergehenden Ansprüche,
dadurch gekennzeichnet,
daß mindestens zwei als Arbeitszylinder ausgebildete Stellkörper (200, 201) vorgesehen sind, die mit Bezug auf die Mittelachse (211) des Hohlkörpers seitlich verschwenkbar sind.

13. Filteranordnung nach einem der vorhergehenden Ansprüche,
dadurch gekennzeichnet,
daß die Stellkörper (200, 201) außerhalb des Hohlkörpers (18) angeordnet und an diesem angelenkt sind.

14. Filteranordnung nach einem der vorhergehenden Ansprüche,
dadurch gekennzeichnet,
daß eine mit den Stellkörpern (200, 201) zusammenarbeitende Verschwenkbegrenzung (202) vorgesehen ist, die sicherstellt, daß die Haube (8) in ihrer unwirksamen Lage eine definierte Position einnimmt.

15. Filteranordnung nach einem der vorhergehenden Ansprüche,
dadurch gekennzeichnet,
daß die Stellkörper (200, 201) an dieselbe Druckluftleitung wie die Düsen angeschlossen sind.

16. Filteranordnung nach einem der vorhergehenden Ansprüche,
dadurch gekennzeichnet,
daß in der Druckluftleitung ein Mehrwegeventil angeordnet ist, durch das die Zufuhr der Luft in die Düsen und die Stellkörper steuerbar ist.

## Claims

1. Filter arrangement for large containers, more especially silos, having a hollow casing which accommodates at least one filter and has one side connectable to the large container and provided with an air inlet aperture, while its other side has at least one air outlet aperture communicating with the filter, characterised in that the filters (12, 14, 16) are insertable into the air outlet apertures (30 to 33) from externally and are supported on the rim of the air outlet apertures (30 to 33) via the intermediary of sealing flanges (40, 41, 42), in that a pressure plate (7), which has apertures (50; 51; 52) corresponding to the air outlet apertures (30 to 33) and covered thereby, corresponds generally, in respect of configuration, to the top end of the hollow casing (18) and is in pressurised connection with the sealing flanges (40; 41; 42) of the filters (12, 14, 16), in that a cap (8), which can be brought from the region of the air outlet end, is disposed above the pressure plate (7), and in that nozzles are disposed between the cap (8) and the pressure plate (7), said nozzles being directed into the apertures (50; 51; 52) and being connected to compressed-air lines.

2. Filter arrangement according to claim 1, characterised in that the air outlet aperture (30) is provided with a flange (60, 61, 62), which is disposed in the interior of the hollow casing (18) and surrounds the filter flange (40, 41, 42) radially.

3. Filter arrangement according to claim 1 or 2, characterised in that the filter flange (42) is provided with a frustoconical portion (42˝) and an annular portion (42′), the annular portion (42′) surrounding the base of the frustoconical portion (42˝) and being in the form of a support for the filter (12).

4. Filter arrangement according to one of claims 1 to 3, characterised in that the flange (62) is connectable to the frustoconical portion (42˝) of the filter flange (42) in a form-locking manner.

5. Filter arrangement according to one of claims 1 to 4, characterised in that, in the operative state of the cap (8), the spacing between the cap (8) and the end (23) of the hollow casing provided with air outlet apertures is smaller than the thickness of the filter flange (40, 41, 42) in the unloaded state.

6. Filter arrangement according to one of claims 1 to 5, characterised in that the aperture (51) in the cap (8) is surrounded by a flange (2), which protrudes towards the hollow casing (18) and is in pressurised connection with the filter flange (41).

7. Filter arrangement according to one of claims 1 to 6, characterised in that the cap (8) co-operates with the hollow casing (18) via a pivot joint (70) and with a clamping device (72) via a lifting and pivoting arrangement (200, 201).

8. Filter arrangement according to one of claims 1 to 7, characterised in that the cap (8) is pivotable through at least 90° in a horizontal and/or vertical plane.

9. Filter arrangement according to one of claims 1 to 8, having a cylindrical or parallelepiped hollow casing and a plurality of filter elements, characterised in that a sealing ring (74), which surrounds the filters (12, 14, 16), is clamped in position between the cap (8) and the hollow casing (18).

10. Filter arrangement according to one of the preceding claims, characterised in that the pressure plate (7) is connected to the cap (8) via cross-piece members, between which the filtered air, flowing from the large container, may flow outwardly.

11. Filter arrangement according to one of the preceding claims, characterised in that the lifting and pivoting arrangement comprises at least one adjusting member (200, 201) co-operating with the cap (8), said adjusting member urging the cap (8) axially towards the hollow casing (18) in its operative state and securedly retaining said cap, while said adjusting member retains the cap (8), in its inoperative state, laterally of the central axis (211) of the hollow casing.

12. Filter arrangement according to one of the preceding claims, characterised in that at least two adjusting members (200, 201) are provided, which are in the form of working cylinders and are laterally pivotable relative to the central axis (211) of the hollow casing.

13. Filter arrangement according to one of the preceding claims, characterised in that the adjusting members (200, 201) are disposed externally of the hollow casing (18) and are pivotally mounted thereon.

14. Filter arrangement according to one of the preceding claims, characterised in that a means (202) for limiting the pivotal movement is provided, which co-operates with the adjusting members (200, 201) and ensures that the cap (8) assumes a specific position in its inoperative state.

15. Filter arrangement according to one of the preceding claims, characterised in that the adjusting members (200, 201) communicate with the same compressed-air line as the nozzles.

16. Filter arrangement according to one of the preceding claims, characterised in that a multi-directional valve is disposed in the compressed-air line, and the supply of the air into the nozzles and the adjusting members is controllable by means of said valve.

## Revendications

1. Agencement de filtrage pour gros conteneurs, notamment pour silos, avec un corps creux contenant au moins un filtre, corps creux dont un côté pouvant être raccordé au gros conteneur présente une ouverture d'admission d'air, tandis que l'autre côté présente au moins une ouverture de sortie d'air communiquant avec le filtre,
caractérisé
par le fait les filtres (12, 14, 16) peuvent être introduits dans les ouvertures de sortie d'air (30 à 35) à partir de l'extérieur et s'appuient contre les bords des ouvertures de sortie d'air (30 à 33) par l'intermédiaire de brides d'étanchéité (40, 41, 42),
par le fait qu'une plaque de pression (7) présentant des ouvertures (50; 51; 52) correspondant aux ouvertures de sortie d'air (30 à 33) et en alignement avec ces dernières, plaque de pression (7) dont la forme correspond sensiblement au côté de recouvrement du corps creux (18), est appliquée sous pression sur les brides d'étanchéité (40; 41; 42) des filtres (12, 14, 16),
par le fait qu'au-dessus de la plaque de pression (7) est disposé un capot (8) susceptible d'être éloigné de la région du côté d'évacuation d'air, et
par le fait qu'entre le capot (8) et la plaque de pression (7) sont disposées des tuyères dirigées vers les ouvertures (50; 51; 52) et raccordées aux canalisations d'air comprimé.

2. Agencement de filtrage suivant la revendication 1,
caractérisé
par le fait que l'ouverture de sortie d'air (30) comporte une bride (60, 61, 62) disposée dans l'enceinte intérieure du corps creux (18), bride qui entoure du côté radial la bride (40, 41, 42) du filtre.

3. Agencement de filtrage suivant l'une ou l'autre des revendications 1 et 2,
caractérisé
parle fait que la bride (42) du filtre comporte un tronçon de forme tronconique (42˝) et un tronçon annulaire (42′), le tronçon annulaire (42′) entourant la base du tronçon de forme tronconique (42˝) et remplissant la fonction de support du filtre (12).

4. Agencement de filtrage suivant l'une quelconque des revendications de 1 à 3,
caractérisé
par le fait que la bride (62) peut être reliée par solidarité de forme avec le tronçon tronconique (42˝) de la bride (42) du filtre.

5. Agencement de filtrage suivant l'une quelconque des revendications de 1 à 4,
caractérisé
par le fait que lorsque le capot (8) est à l'état actif, la distance entre le capot (8) et le côté ouverture de sortie d'air (23) du corps creux est inférieure à l'épaisseur de la bride de filtre (40, 41, 42) à l'état non sollicité.

6. Agencement de filtrage suivant l'une quelconque des revendications de 1 à 5,
caractérisé
par le fait que l'ouverture (51) du capot (8) est entourée par une bride (2) en protubérance en direction du corps creux (18) et en communication de pression avec la bride (41) de filtre.

7. Agencement de filtrage suivant l'une quelconque des revendications de 1 à 6,
caractérisé
caractérisé par le fait que le capot (8) coopère avec me corps creux par l'intermédiaire d'une articulation (70) et d'un dispositif tendeur (72) par le truchement d'un dispositif de levage et de pivotement (200, 201).

8. Agencement de filtrage suivant l'une quelconque des revendications de 1 à 7,
caractérisé
par le fait que le capot (8) peut pivoter d'un angle d'au moins 90° dans un plan horizontal et/ou dans un plan vertical.

9. Agencement de filtrage suivant l'une quelconque des revendications de 1 à 8 avec un corps creux de forme cylindrique ou parallélépipédique et avec plusieurs éléments de filtrage,
caractérisé
par le fait qu'entre le capot (8) et le corps creux (18) est serrée une bague d'étanchéité (74) entourant les filtres (12, 14, 16).

10. Agencement de filtrage suivant l'une quelconque des revendications précédentes,
caractérisé
par le fait que la plaque de pression (7) est reliée au capot (8) par l'intermédiaire d'entretoises, entre lesquelles l'air qui s'écoule du gros conteneur et filtré peut s'écouler vers l'extérieur.

11. Agencement de filtrage suivant l'une quelconque des revendications précédentes,
caractérisé
par le fait que le dispositif de levage et de pivotement est constitué par au moins un organe de commande (200, 201) coopérant avec le capot (8), organe de commande qui applique le capot (8), dans la position active de ce dernier, axialement contre le corps creux (18) et l'y maintient, tandis que dans la position non active du capot (8), l'organe de commande maintient le capot latéralement de l'axe médian (211) du corps creux.

12. Agencement de filtrage suivant l'une quelconque des revendications précédentes,
caractérisé
par le fait qu'au moins deux organes de commande (200, 201) ayant la forme de cylindres de travail sont prévus, lesquels peuvent être pivotés latéralement par rapport à l'axe médian (211) du corps creux.

13. Agencement de filtrage suivant l'une quelconque des revendications précédentes,
caractérisé
par le fait que les organes de commande (200, 201) sont disposés à l'extérieur du corps creux (18) et sont articulés sur celui-ci.

14. Agencement de filtrage suivant l'une quelconque des revendications précédentes,
caractérisé
par le fait qu'un limiteur de pivotement (202) coopérant avec les organes de commande (200, 201) est prévu, limiteur qui assure que le capot (8), lorsqu'il est non actif, occupe une position bien définie.

15. Agencement de filtrage suivant l'une quelconque des revendications précédentes,
caractérisé
par le fait que les organes de commande (200, 201) sont raccordés à la même canalisation d'air comprimé que les tuyères.

16. Agencement de filtrage suivant l'une quelconque des revendications précédentes,
caractérisé
par le fait que dans la canalisation d'air comprimé est disposée une soupape à plusieurs voies, permettant le réglage de l'admission d'air dans les tuyères et dans les organes de commande.
